# EUROPEAN PATENT SPECIFICATION

(11) **EP 4 027 793 B1**
(45) Date of publication and mention of the grant of the patent: **23.07.2025**
(21) Application number: 20797545.9
(22) Date of filing: 10.09.2020
(51) Int. Cl.: A01N 43/90, A01P 13/00

(54) **USE OF THIOSANGIVAMYCIN AS A HERBICIDE AND METHOD OF WEED CONTROL**
VERWENDUNG VON THIOSANGIVAMYCIN ALS HERBIZID UND VERFAHREN ZUR UNKRAUTBEKÄMPFUNG
UTILISATION DE THIOSANGIVAMYCINE EN TANT QU'HERBICIDE ET PROCÉDÉ DE LUTTE CONTRE LES MAUVAISES HERBES

(30) Priority: 10.09.2019 PL 43112519
(43) Date of publication of application: 20.07.2022
(73) Proprietor: Uniwersytet Warszawski, 00-927 Warszawa (PL); Instytut Biochemii I Biofizyki Polskiej Akademii Nauk, 02-106 Warszawa (PL)
(72) Inventor: ARCHACKI, Rafal, 02-643 Warszawa (PL); SIEDLECKI, Pawel, 00-560 Warszawa (PL); SOSNOWSKA, Katarzyna, 05-800 Pruszkow (PL); WOJCIKOWSKI, Maciej, 05-807 Podkowa Lesna (PL)
(74) Representative: JD&P Patent Attorneys Joanna Dargiewicz & Partners
(86) International application number: PCT/IB2020/058425
(87) International publication number: WO 2021/048787

(56) References cited:
- KR-A- 20030 068 719
- EUI HWANG ET AL: "Isolation of Sangivamycin from Streptomyces sp. A6497 and its Herbicidal Activity", J. MICROBIOL. BIOTECHNOL, 1 January 2005 (2005-01-01), pages 434 - 437, XP055755406, Retrieved from the Internet <URL:http://www.jmb.or.kr/journal/download_pdf.php?spage=434&volume=15&number=2>
- YOSHITAKE TANAKA ET AL: "Screening Method for Cellulose Biosynthesis Inhibitors with Herbicidal Activity.", THE JOURNAL OF ANTIBIOTICS, vol. 48, no. 7, 1 January 1995 (1995-01-01), pages 720 - 724, XP055046495, ISSN: 0021-8820, DOI: 10.7164/antibiotics.48.720
- RENAU T E ET AL: "Relationship between cytotoxicity and conversion of thiosangivamycin analogs to toyocamycin analogs in cell culture medium", BIOCHEMICAL PHARMACOLOGY, ELSEVIER, US, vol. 48, no. 4, 17 August 1994 (1994-08-17), pages 801 - 807, XP025984834, ISSN: 0006-2952, [retrieved on 19940817], DOI: 10.1016/0006-2952(94)90059-0

## Description

The present invention provides the use of thiosangivamycin, 4-amino-7-(β-D-ribofuranosyl)-7H-pyrrolo[2,3-d]pyrimidine-5-carbothioamide as a herbicide, and a method of weed control with the use of thiosangivamycin.

Although there are many herbicide preparations available on the market, new substances with herbicidal effect are continuously sought. There are several reasons which cause the need for new substances, the main of which are the unsatisfactory efficiency and/or safety, as well as the continuous development of weed resistance to the preparations used so far.

The object of the present invention was to find a compound with herbicidal effect which would be characterized by a better or at least comparable herbicidal effect to that of the compounds currently used, while having low toxicity to other living organisms.

Thus, the present invention provides the use of thiosangivamycin as an herbicide.

Preferably, thiosangivamycin is used as an aqueous solution.

Preferably, the aqueous solution further comprises a surfactant.

The invention provides also the use of a herbicide composition, characterized in that it comprises thiosangivamycin as an active ingredient.

Preferably, the herbicide composition additionally comprises a surfactant such as Tween 20, Silwet, and Igepal (NP-40).

The invention also relates to a method of weed control, where the thiosangivamycin is applied as a solution pre- or post-emergently or pre- and post-emergently to plants, plant parts, plant seeds or to the cultivated soil.

Preferably, an aqueous solution of thiosangivamycin is used.

Carrying out extensive research, the present inventors have identified a chemical compound, thiosangivamycin, 4-amino-7-(β-D-ribofuranosyl)-7H-pyrrolo[2,3-d]pyrimidine-5-carbothioamide, hereinafter abbreviated as TSGM, characterized by a potent herbicidal effect. The compound showed a stronger herbicidal effect than the commercially used reference compound, ammonium glufosinate, in laboratory tests *(in vitro)* and after foliar application in greenhouse settings on such species as: field *Myosotis arvensis* (forget-me-not), *Thymus serpyllum* (thymus), Tagetes *tenuifolia* (marigold), *Arabidopsis thaliana* (thale cress), and *Brachypodium distachyon* (purple false brome) The effect of TSGM after foliar application was comparable or stronger than that of its derivatives: tubercidin, toyocamycin, and sangivamycin. A test with the soil nematode *C*. *elegans* did not show a significant effect on the vital functions of this organism in a range of the same and higher concentrations than those used in the tests on plants, which indicates low toxicity of the test compound.

Thiosangivamycin, 4-amino-7-(β-D-ribofuranosyl)-7H-pyrrolo[2,3-d]pyrimidine-5-carbothioamide or 4-amino-7-[(2R,3R,4S,5R)-3,4-dihydroxy-5-(hydroxymethyl)oxolan-2-yl]pyrrolo[2,3-d]pyrimidine-5-carbothioamide (according to IUPAC), abbreviated to TSGM, is a derivative of the natural antibiotic tubercidin. Formula 1 shows the chemical structure of thiosangivamycin.

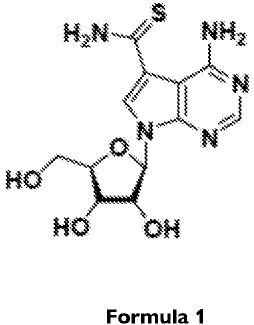

Thiosangivamycin is not and has not been used as an herbicide until now. There is no information about TSGM effects on plants in both patent literature and scientific publications. There is one report on tubercidin derivative effect on plants (Iwamura et al., 1981, Journal of Pesticide Science), as well as one report regarding herbicidal properties of the structurally closest sangivamycin (Hwang et al., 2005, J. Microbiol. Biotechnol. (2005), 15(2), 434-437). However, sangivamycin, the structurally closest derivative of thiosangivamycin, has long been known for its toxicity to living organisms (National Cancer Institute Report., -(269), 1967, National Cancer Institute Screening Program Data Summary, Developmental Therapeutics Program, JAN1986, CRC Handbook of Antibiotic Compounds, Vols. 1-12, Berdy, J., Boca Raton, FL, CRC Press, 1980, 5(313), 1981).

The TSGM compound appears in US patent application 2010/0297079 among compounds with antiviral activity.

Thiosangivamycin mechanism of action is unknown. Its closest derivative, sangivamycin, is known as an inhibitor of human protein kinases C (US patent application 2011039770) and as an inhibitor of human protein HSP72 (Cheeseman et al. 2016, J. Med. Chem., 59, 4625-4636).

### Brief description of the drawings

Fig. 1. Effects of TSGM compound and reference compound on Arabidopsis thaliana *in vitro.*
Fig. 2 Effects of TSGM compound and reference compound on the growth of *Thymus serpyllum* after foliar application.
Fig. 3 Effects of TSGM compound and reference compound on the growth of *Tagetes tenuifolia* after foliar application.
Fig. 4 Effects of TSGM compound and reference compound on the growth of *Brachypodium distachyon* after foliar application.
Fig. 5 Effects of TSGM compound and reference compound on the growth of *Arabidopsis thaliana* (A) and the ability to induce leaf necrosis in *Myosotis arvensis* (B) after foliar application.
Fig. 6 Effects of tubercidin, toyocamycin and sangivamycin on Arabidopsis thaliana *in vitro.* A - effect in the concentration range of 100-1 µM; B - sangivamycin and TSGM effects at a concentration of 1 and 0.2 µM.
Fig. 7 Effect of sangivamycin on the growth of *M. arvensis,* A. *thaliana, T. tenuifolia,* and *T. serpyllum* after foliar application.

### EXAMPLES

### Example 1: Obtaining thiosangivamycin (TSMG)

Thiosangivamycin was obtained by the method described in: Krawczyk, S. H. et al. J. Med. Chem. 1995, 38, 4115-4119.

400 mg of toyocamycin (4-amino-7-(β-D-ribofuranosyl)-7H-pyrrolo[2,3-d]pyrimidine-5-carbonitrile, 1.45 mmol, 1 eq.) was dissolved in a mixture of 20 mL of pyridine and 1 mL of triethylamine, and then hydrogen sulfide gas was bubbled through the resulting solution for three hours. The solvent was evaporated under reduced pressure and the residue was evaporated again with water (10 mL). The crude product was dissolved in boiling water (25 mL), the hot solution was treated with activated charcoal, filtered and then allowed to crystallize. The obtained product was recrystallized from water-ethanol mixture (9:1 v/v, 20 mL) giving 185 mg of pure product (39% yield). This compound was dissolved in DMSO (50 mM concentration) for biological tests.

### Example 2: Effect of thiosangivamycin (TSMG) on plant growth

### 1. In vitro tests

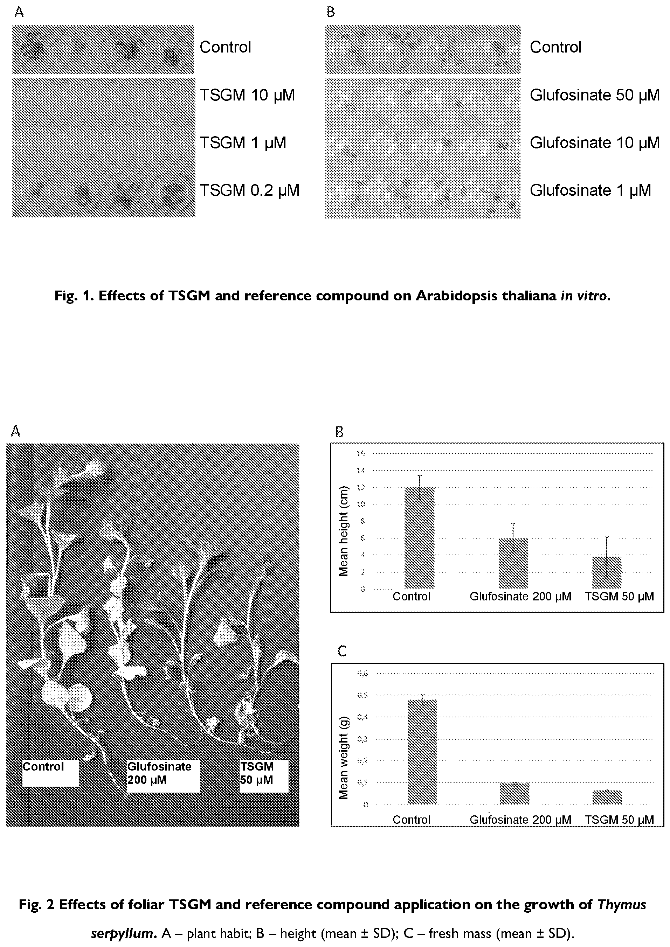

Thiosangivamycin was identified through screening of chemicals which exhibit effects on plant development and growth. The test subject was the thale cress *(Arabidopsis thaliana),* a dicotyledonous model plant used in plant research and, at the same time, weed of cereal and root crops. The screening test was performed *in vitro* in the liquid ½ Murashige and Skoog (MS) medium at a constant temperature of 21°C and under continuous light with the intensity of 200 µM m⁻² s⁻¹. Germination and initial plant growth (5 days) took place in the ½ MS medium, with the subsequent test compound addition to the medium at a suitable concentration. After a further 5 days of growth in the presence of the test compound, its influence on the plant growth was assessed. TSGM compound strongly inhibited plant growth and led to tissue necrosis and plant death at a concentration of 1 µM (Fig. 1A). Compound effect was compared to that of the reference compound, ammonium glufosinate, an active ingredient of commercial herbicides. The reference compound showed a similar effect at a concentration of 50 µM (Fig. 1B).

### 2. Greenhouse tests

TSGM effect was analyzed in greenhouse settings after foliar application. The following plant species were used: *Arabidopsis thaliana* (thale cress), *Myosotis arvensis* (forget-me-not), *Thymus serpyllum* (thymus), Tagetes *tenuifolia* (marigold), and *Brachypodium distachyon* (purple false brome). Of the mentioned species, purple false brome is a monocotyledonous plant, and the rest belong to the dicotyledones.

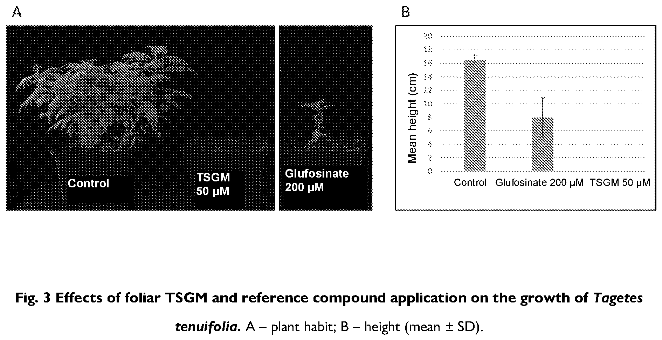

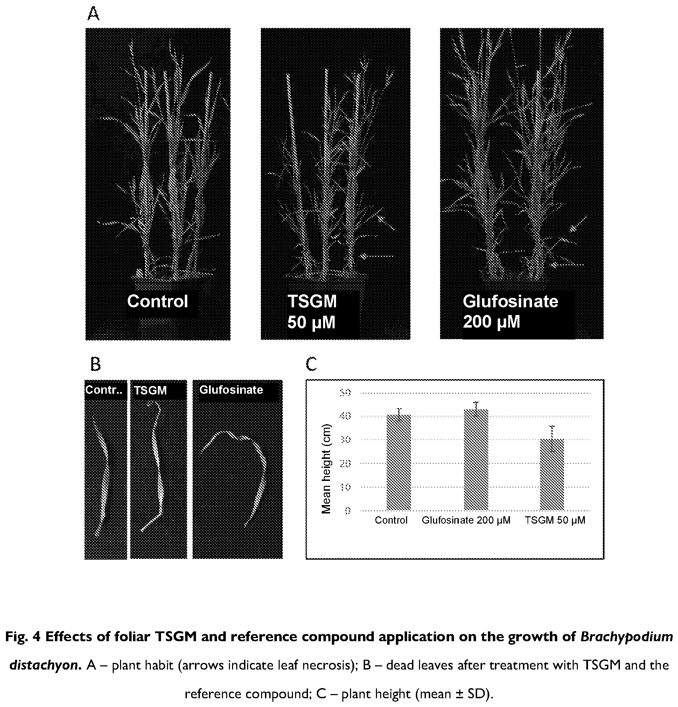

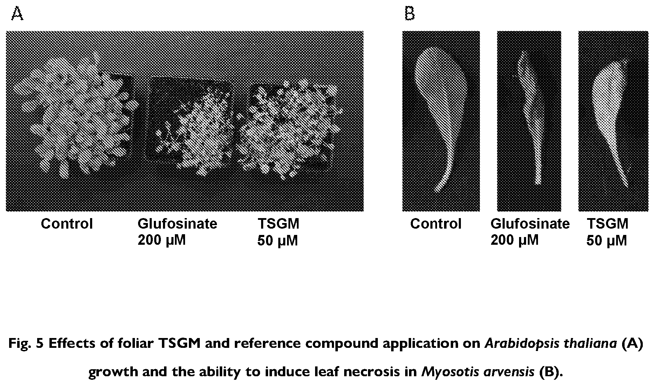

2-week-old plants were sprayed during 15 days, every 3 days, with an aqueous solution of the test substance at a concentration of 50 µM or a solution of the reference compound, ammonium glufosinate, at a concentration of 200 µM. The solutions contained a surfactant (Tween 20, 0.02%) to facilitate compound penetration through the leaf surface. Experiment control constituted of plants sprayed with a solution containing no active substances. After the spraying period, the growth and development of the treated plants were assessed. Data are summarized in Table 1 and Figs. 2-5. TSGM compound at a concentration of 50 µM causes severe abnormalities in plant growth and development, as does the reference compound at a concentration of 200 µM. In case of TSGM compound used at 50 µM, it was shown that its effect was stronger than that of the reference compound at 200 µM on *Tagetes tenuifolia* and weaker on *Myosotis arvensis.* The effect of both compounds was stronger against dicotyledonous plants than on the monocotyledonous plant *Brachypodium distachyon* (Table 1).

**Table 1. Effects of test substances on the growth of selected plant species.**

| The following scale was used: 0 - no effect; 1 - presence of yellow leaves (chlorosis) and/or growth slowdown; 2 - fragments or single leaves dying off (necrosis); 3 - extensive chlorosis (most leaves are affected); 4 - extensive necrosis (most leaves are affected); 5 - plant death | | | |
|---|---|---|---|
| | **TSGM** | **Glufosinate ammonium** | **Control solution** |
| | 50 µM | 200 µM | |
| *Thymus serpyllum* | 4 | 4 | 0 |
| *Tagetes tenuifolia* | 5 | 4 | 0 |
| *Brachypodium distachyon* | 1.2 | 1.2 | 0 |
| *Arabidopsis thaliana* | 4 | 4 | 0 |
| *Myosotis arvensis* | 2 | 4 | 0 |

Height and fresh mass measurements of the treated plants confirm a significant effect of the test compound TSGM comparable to that of the reference compound used at 4-times higher concentration (Figs. 2-4).

### Example 3: Effects of TSGM compound derivatives

In order to estimate the potency of the TSGM compound in comparison to its close derivatives, the effects of the derivatives: tubercidin, toyocamycin, and sangivamycin, were tested under the same experimental conditions.

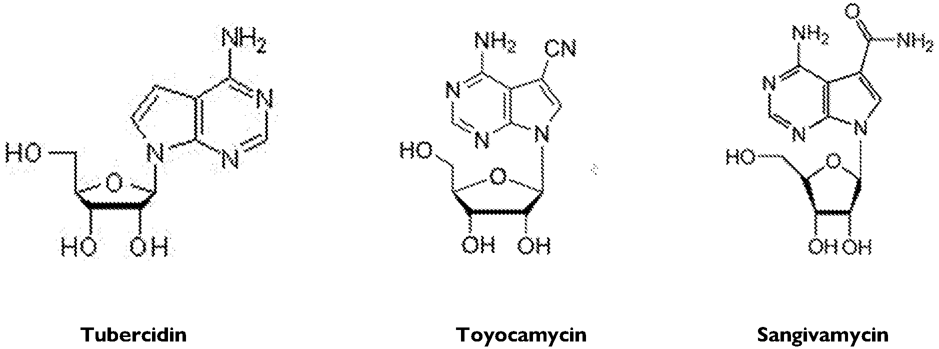

### 1. In vitro tests

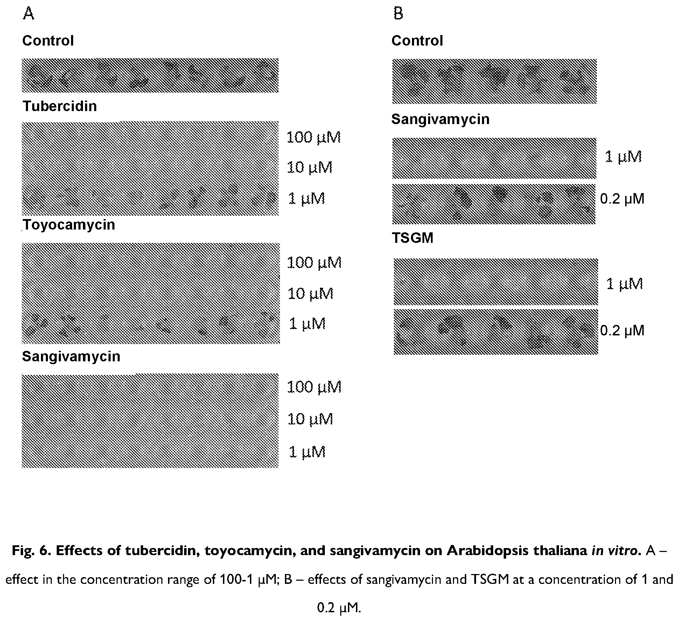

In an *in vitro* study, it was shown that the three test compounds caused plant death at concentrations of 100-10 µM, while sangivamycin also showed this effect at a concentration of 1 µM, which most likely indicates its higher activity (Fig. 6A). The effects of sangivamycin and the claimed TSGM compound were similar, both compounds caused plant death at a concentration of 1 µM, while their effects were not visible at a concentration of 0.2 µM (Fig. 6B).

### 2. Greenhouse tests

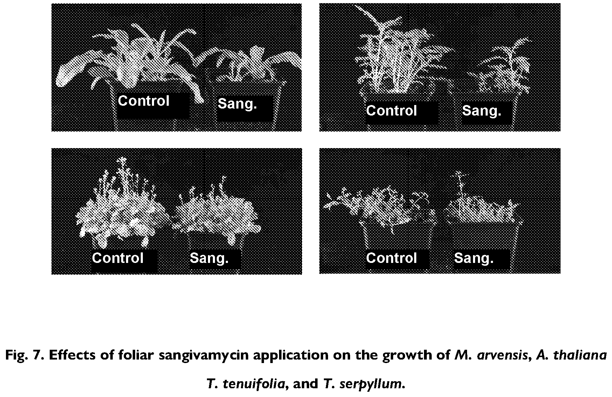

Tubercidin, toyocamycin and sangivamycin effects were analyzed in greenhouse settings in a similar way to TSGM tests after foliar application. The same plant species *(Arabidopsis thaliana, Myosotis arvensis, Thymus serpyllum, Tagetes tenuifolia, Brachypodium distachyon)* and concentrations of 50 µM were used. After the spraying period, growth and development of the treated plants were assessed The data are summarized in Table 2 and Fig. 7. Tubercidin at the concentration of 50 µM showed no visible effect, while toyocamycin showed little effect (single leaf chlorosis, growth slowdown) on A. *thaliana* and *T. serpyllum* (Table 2). Sangivamycin showed its effect against all species in form of growth slowdown and single leaf chlorosis, and in *T*. *tenuifolia* and B. *distachyon* also single leaf necrosis (Table 2, Fig. 6). These results confirm the results of *in vitro* tests showing that sangivamycin is more potent than tubercidin or toyocamycin. Compared to TSGM, the effect of sangivamycin on 3 out of 5 test species was considerably weaker, while in the other 2 species it was weaker or comparable (Table 1 and Table 2). The reason could be higher activity or better tissue penetration of TSGM compared to sangivamycin and the other two derivatives.

**Table 2. Effects of tubercidin, toyocamycin and sangivamycin on the growth of selected plant species. The following scale was used: 0 - no effect; 1 - presence of yellow leaves (chlorosis) and/or growth slowdown; 2 - fragments or single leaves dying off (necrosis); 3 - extensive chlorosis (most leaves are affected); 4 - extensive necrosis (most leaves are affected); 5 - plant death**

| | **Tubercidin** | **Toyocamycin** | **Sangivamycin** | **Control solution** |
|---|---|---|---|---|
| | 50 µM | 50 µM | 50 µM | |
| *Thymus serpyllum* | 0 | 1 | 1 | 0 |
| *Tagetes tenuifolia* | 0 | 0 | 1.2 | 0 |
| *Brachypodium distachyon* | 0 | 0 | 1 | 0 |
| *Arabidopsis thaliana* | 0 | 1 | 1 | 0 |
| *Myosotis arvensis* | 0 | 0 | 1.2 | 0 |

### Estimation of test substance toxicity level

The toxicity of the TSGM compound was estimated in the animal model, *Caenorhabditis elegans,* a free-living soil nematode, very sensitive to all environmental changes. It was investigated how different concentrations of the test compound affect the development and reproduction of this model organism (after 24 h and 47 h). The effects were compared with the that of reference compound (glufosinate ammonium). The tested concentrations were: 1, 10 and 200 µM. Each test was performed in triplicate. The number of dead specimens and the number of young specimens (newly hatched) were estimated. The test results showed no TSGM toxicity to mature animals at the test concentrations (100% survival for 200 µM) and a low, negligible effect on the nematode reproduction process. This effect did not differ from that of the reference compound.

### Summary

A weed-controlling (herbicidal) effect has been demonstrated for the TSGM compound. In foliar application, its effect is comparable to that of reference compound used at four times higher concentration in 3 species, in case of one species the effect is stronger, and in case of other one species it is weaker than that of the commercial reference compound (ammonium glufosinate). The effect of TSGM in foliar application was comparable or stronger than that of its derivatives: tubercidin, toyocamycin, and sangivamycin. Tests with the C. *elegans* nematode indicate that TSGM has a low toxicity.

## Claims

1. Use of thiosangivamycin as a herbicide.

2. The use according to claim 1, wherein thiosangivamycin is used as an aqueous solution.

3. The use according to claim 1, wherein the aqueous solution further comprises a surfactant.

4. Use of composition comprising thiosangivamycin as a herbicide.

5. The use according to claim 4, **characterized in that** the composition further comprises a surfactant such as Tween 20, Silwet, and Igepal (NP-40).

6. A method of weed control, **characterized in that** the thiosangivamycin is applied as a solution pre- or post-emergently or pre- and post-emergently to plants, plant parts, plant seeds or to the cultivated soil.

7. The method according claim 6, **characterized in that** the thiosangivamycin aqueous solution is used.

## Patentansprüche

1. Verwendung von Thiosangivamycin als Herbizid.

2. Verwendung gemäß Anspruch 1, wobei Thiosangivamycin als wässrige Lösung verwendet wird.

3. Verwendung gemäß Anspruch 1, wobei die wässrige Lösung zusätzlich ein Tensid enthält.

4. Verwendung einer Zusammensetzung, die Thiosangivamycin als Herbizid enthält.

5. Verwendung gemäß Anspruch 4, **dadurch gekennzeichnet, dass** die Zusammensetzung zusätzlich ein Tensid wie Tween 20, Silwet und Igepal (NP-40) enthält.

6. Verfahren zur Unkrautbekämpfung, **dadurch gekennzeichnet, dass** das Thiosangivamycin als Lösung vor oder nach dem Auflaufen oder vor und nach dem Auflaufen auf Pflanzen, Pflanzenteile, Pflanzensamen oder auf den kultivierten Boden aufgebracht wird.

7. Verfahren nach Anspruch 6, **dadurch gekennzeichnet, dass** die wässrige Thiosangivamycin-Lösung verwendet wird.

## Revendications

1. Utilisation de la thiosangivamycine en tant qu'herbicide.

2. Utilisation selon la revendication 1, dans laquelle la thiosangivamycine est utilisée sous forme de solution aqueuse.

3. Utilisation selon la revendication 1, dans laquelle la solution aqueuse comprend en outre un agent tensioactif.

4. Utilisation d'une composition comprenant de la thiosangivamycine en tant qu'herbicide.

5. Utilisation selon la revendication 4, **caractérisée par le fait que** la composition comprend en outre un surfactant tel que Tween 20, Silwet, et Igepal (NP-40).

6. Méthode de lutte contre les mauvaises herbes, **caractérisée par le fait que** la thiosangivamycine est appliquée sous forme de solution en pré- ou post-levée ou en pré- et post-levée à des plantes, des parties de plantes, des graines de plantes ou au sol cultivé.

7. Méthode selon la revendication 6, **caractérisée par** l'utilisation d'une solution aqueuse de thiosangivamycine.
